Europäisches Patentamt

European Patent Office

Office européen des brevets

(11) Veröffentlichungsnummer: **0 200 992 B1**

(12) **EUROPÄISCHE PATENTSCHRIFT**

(45) Veröffentlichungstag der Patentschrift: **22.01.92**

(21) Anmeldenummer: **86105585.3**

(22) Anmeldetag: **23.04.86**

(51) Int. Cl.⁵: **C01G 49/02**, H01F 1/11, G11B 5/706

(54) **Verfahren zur Herstellung isometrischer kobalt- und titanhaltiger magnetischer Eisenoxide.**

(30) Priorität: **30.04.85 DE 3515517**

(43) Veröffentlichungstag der Anmeldung:
**17.12.86 Patentblatt 86/46**

(45) Bekanntmachung des Hinweises auf die
Patenterteilung:
**22.01.92 Patentblatt 92/04**

(84) Benannte Vertragsstaaten:
**DE FR GB NL**

(56) Entgegenhaltungen:
**FR-A- 2 163 701**

(73) Patentinhaber: **BASF Aktiengesellschaft
Carl-Bosch-Strasse 38
W-6700 Ludwigshafen(DE)**

(72) Erfinder: **Steck, Werner, Dr.
Auerstrasse 4
W-6700 Ludwigshafen(DE)**
Erfinder: **Hibst, Hartmut, Dr.
Sternstrasse 215
W-6700 Ludwigshafen(DE)**
Erfinder: **Jakusch, Helmut, Dr.
Lorscher Ring 6 c
W-6710 Frankenthal(DE)**

**Beschreibung**

Die Erfindung betrifft ein Verfahren zur Herstellung isometrischer kobalt- und titanhaltiger magnetischer Eisenoxide durch Umsetzung nadelförmiger Eisen(III)oxidhydroxide mit Verbindungen des zweiwertigen Kobalts und Eisens sowie Verbindungen des vierwertigen Titans in wäßrig alkalischer Suspension bei erhöhter Temperatur.

Die Entwicklung der magnetischen Aufzeichnungsträger ist seit geraumer Zeit, insbesondere durch die Anforderungen bei der Daten- und Video-signalspeicherung, auf Aufzeichnungen in hoher Dichte gerichtet. Für diesen Zweck werden Aufzeichnungsmaterialien mit äußerst glatten Oberflächen auf der Basis von in organischen Bindemitteln feinverteilten magnetischen Materialien mit sehr hohen Koerzitivfeldstärken als besonders geeignet angesehen. Durch die mit der Erhöhung der Aufzeichnungsdichte verbundenen Verringerung der Aufzeichnungswellenlänge macht sich zunehmend die Verringerung der Ausgangsleistung durch Selbstentmagnetisierung der Aufzeichnungsschicht bemerkbar. Eine Verminderung der Entmagnetisierung ist zwar durch die Verringerung der Schichtdicke möglich. Doch sind dieser Maßnahme bei magnetische Pulver enthaltenden Bindemittelschichten aufweisenden Aufzeichnungsträgern sowohl hinsichtlich der Verringerung des vorhandenen magnetischen Materials pro Flächeneinheit, d.h. der remanenten Magnetisierung des Schichtelements als auch aus fertigungstechnischen Gründen Grenzen gesetzt. Ein anderer Weg, das Problem der geringen Schichtdicke bei dennoch ausreichender Magnetisierung zu beheben, wird mit Aufzeichnungsmaterialien auf der Basis von dünnen magnetischen Metallfilmen versucht. Hierbei treten jedoch neben den Problemen der Herstellung solcher homogener Metallschichten vor allem mechanische Probleme bei deren Benutzung auf.

Im Hinblick auf die aufgezeigten Schwierigkeiten und im Bestreben dennoch magnetische Aufzeichnungssysteme, welche eine hohe Aufzeichnungsdichte bei hohen Ausgangspegeln aufweisen, bereitzustellen, wurde auch bereits vorgeschlagen, eine zum Aufzeichnungsträger senkrechte magnetische Aufzeichnung vorzunehmen. Hierzu müßten die Aufzeichnungsträger Schichten aufweisen, die zumindest in dem Schichtbereich, welcher dem Magnetkopf am nächsten lag, eine senkrechte Magnetisierung ermöglichen (US-PS 3 052 567). In der weiteren Entwicklung dieses Prinzips wurde eine Reihe unterschiedlicher magnetischer Schichten mit einer zur Trägerfläche senkrechten magnetischen Anisotropie, meist auf der Basis von Co/Cr-Schichten, untersucht. Jedoch konnten weder die Herstellung noch die erzielbaren Eigenschaften bisher befriedigen. Ein wesentliches Problem stellte aber auch die Entwicklung eines für die Aufzeichnungsverfahren geeigneten Magnetkopfes dar.

Ein anderer Weg zur Erhöhung der Aufzeichnungsdichte bei hoher Empfindlichkeit wurde in der Ausnutzung der Vertikalkomponente des für die Aufzeichnung verwendeten magnetischen Feldes gesehen. Hierbei wird die insbesondere bei hoher Aufzeichnungsdichte (kurzer Wellenlänge) wirksame Vertikalkomponente eines von einem Ringkopf auf der Oberfläche der magnetischen Schicht erzeugten magnetischen Feldes herangezogen. Als magnetische Materialien für solche Aufzeichnungssysteme eignen sich Produkte, die eine hohe relative Remanenz in allen Richtungen des Aufzeichnungsträgers ergeben. Hierfür eignen sich magnetische isotrope Materialien, insbesondere diejenigen, die auf der Basis der bekannten kubischen Eisenoxide, vor allem des würfelförmigen Magnetits, aufgebaut sind. Die Herstellung dieses Magnetits ist bekannt, so z.B. ausgehend von $\alpha$-, $\beta$- oder $\gamma$-FeOOH zusammen mit $Fe(OH)_2$ (u.a. DE-OSen 25 08 155, 27 46 359, 25 08 085, JA-OS 36 932 (1983)). Auch die Herstellung von würfelförmigen Kobaltferrit aus Kobalthydroxid und $\gamma$-FeOOH ist bereits beschrieben wor-den (Krause et al., Z. f. anorg. Ch., Band 331, Seite 231 (1964)). Im Rahmen der Bestimmung kristallographischer und magnetischer Strukturen mittels Elektronenbeugung wurde das dreiwertige Eisen im Kobaltferrit teilweise durch Kobalt(II)- und Titan(IV)-Ionen ersetzt (Abbes et al., J. of Magnetism and Magnetic Materials 31-34 (1983), 635-636). Aus der JA-OS 128 597/1978 ist die Gewinnung eines plättchenförmigen mit Titan, Mangan und Nickel modifizierten Gamma-Eisen(III)oxids aus stark alkalischem Milieu auf hydrothermalem Wege bekannt. Diese Materialien haben jedoch den Nachteil, daß sie sich entweder hinsichtlich der magnetischen Eigenschaften, insbesondere der Koerzitivfeldstärke oder aber bezüglich der Stabilität der magnetischen Eigenschaften bei thermischer oder mechanischer Belastung, nicht für die Anwendung bei magnetischen Aufzeichnungsträgern eignen.

Aufgabe der Erfindung war es daher, ein Verfahren zur Herstellung isometrischer magnetischer Eisenoxide bereitzustellen, das sich einerseits in einfacher und wirtschaftlicher Weise mit gängigen Rohstoffen bewerkstelligen läßt und andererseits ein magnetisches Material liefert, das sich durch eine isotrope Magnetisierung, durch eine für Aufzeichnungsträger geeignete hohe Koerzitivfeldstärke und darüber hinaus vor allem durch eine besonders enge Schaltfeldstärkenverteilung der magnetisierbaren Einzelpartikel auszeichnet. Diese Eigenschaften sind insbesondere für die magnetische Aufzeichnung in hoher Dichte von Bedeutung. Zur Lösung sung dieser Aufgabe bot sich der Einsatz von leicht zugänglichem Eisen-(II)chlorid als Ausgangsmaterial und die Modifikation von isotropem Magnetit mit Kobalt an.

Es wurde nun gefunden, daß sich die gestellte Aufgabe durch ein Verfahren zur Herstellung isometrischer kobalt- und titanhaltiger magnetischer Eisenoxide, enthaltend 2 bis 8 Gew.% Kobalt und 0,5 bis 6 Gew.% Titan(IV)-Ionen, lösen läßt, wenn zur Herstellung dieses Materials nadelförmiges Eisen(III)-oxidhydroxid in wäßrig alkalischer Suspension mit Verbindungen des zweiwertigen Kobalt und Eisens sowie des vierwertigen Titans bei pH-Werten von größer 8 unter Inertgas bei Temperaturen zwischen 35°C und dem Siedepunkt der Suspension umgesetzt wird.

In einer besonders vorteilhaften Ausgestaltung des erfindungsgemäßen Verfahrens werden die danach erhaltenen Kobalt-, Titan- und Eisen(II)-haltigen Eisenoxide bei Temperaturen zwischen 120 und 450°C mit oxidierenden Gasen zumindest teilweise oxidiert.

Durch den Zusatz von Titan(IV)-Ionen und der gegebenenfalls zumindest teilweisen Oxidation der nach dem erfindungsgemäßen Verfahren erhaltenen isometrischen Kobalt(II)-, Titan(IV)- und gegebenenfalls Eisen(II)-haltigen Eisenoxide lassen sich Materialien mit wesentlich höherer Koerzitivfeldstärke erreichen als ohne den Titanzusatz. In gleicher Weise werden auch - neben den Vorteilen durch die dadurch mögliche Verringerung des Kobaltgehaltes - die relative Remanenz erhöht und eine engere Schaltfeldstärkenverteilung erreicht.

Als Ausgangsmaterial für das erfindungsgemäße Verfahren wird das auf bekannte Weise erhältliche nadelförmige Eisen(III)oxidhydroxid eingesetzt. Besonders bevorzugt wird hierbei das nadelförmige γ-FeOOH (Lepidokrokit). Es läßt sich für die Reaktion in Form des gewaschenen oder ungewaschenen Filterkuchens oder als bereits getrocknetes Pigment heranziehen. Das γ-FeOOH läßt sich beispielsweise durch Ausfällen von Eisen(II)hydroxid aus einer Eisen(II)chloridlösung mit Ammoniak bei pH = 7 bei einer Temperatur von 20 bis 50°C und durch anschließendes Oxidieren des ausgefällten Hydroxids mit Luft unter Beibehaltung des pH-Wertes herzustellen (Schwertmann, Zeitschrift f. Anorg. Chemie 298 (1959), 337 bis 348). Aus der DE-PS 1 223 352 ist ein weiteres Verfahren zur Herstellung des Lepidokrokits bekannt, bei dem die Keimbildung durch Fällung von Eisen(II)-salzlösungen mit Alkali- oder Erdalkalibasen und Oxidation des Eisen(II)-hydroxids oder -carbonats mit Sauerstoff, Luft, organischen Nitroverbindung oder anderen Oxidationsmitteln erfolgt und gegebenenfalls ein Keimwachstum des Lepidokrokits in Eisen(II)salzlösungen entweder in Gegenwart von metallischem Eisen oder in Eisen(II)salzlösungen bei gleichzeitiger Zugabe äquivalenter Mengen von Eisen(II)-Ionen und Alkali- oder Erdalkalilösungen oder -suspensionen oder bei gleichzeitiger Zugabe äquivalenter Mengen von Eisen(II)-Ionen und Alkali- oder Erdalkalibasen, -lösungen oder -suspensionen unter Verwendung der Oxidationsmittel durchgeführt wird. In ähnlicher Weise kann der Lepidokrokit auch erhalten werden, wenn in einer ersten Stufe eine Aufschlämmung von kolloidalen Lepidokrokit-Keimen erzeugt wird, indem Eisen(II)chlorid mit wäßrigem Alkali vereinigt und das erhaltene Gemisch unter Einleitung eines Sauerstoff enthaltenden Gases bis zu einem pH-Wert des Gemisches zwischen 2,9 und 4.1 gerührt und dann in einer zweiten Stufe der Aufschlämmung unter kräftigem Rühren bei einer Temperatur von 26,7 bis 60°C und unter Aufrechterhaltung des pH-Wertes in Gegenwart eines Überschusses von Eisen(II)chlorid gleichzeitig und kontinuierlich Alkali und ein Sauerstoff enthaltendes Gas solange zugeführt wird, bis 1,2 bis 5 Gew.-Teile des Gesamtproduktes pro Gewichtsteil der Keimmenge gebildet worden sind. Auch nach der DE-AS 10 61 760 lassen sich geeignete γ-FeOOH-Partikel erhalten. Auch γ-FeOOH, das in Gegenwart von Komplexbildnern für Eisenionen und/oder in Gegenwart von bestimmten Fremddionen gemäß der EP-A-40 722, DE-AS 12 19 009 und den DE-PSen 1 223 352 und 1 225 157 hergestellt wurde, ist geeignet.

Gemäß dem erfindungsgemäßen Verfahren wird nun eine wäßrige Suspension des Eisen(III)-oxidhydroxids, vorzugsweise γ-FeOOH, in einem mit einer Inertgas-, vorzugsweise Stickstoffatmosphäre versehenen Rührbehälter vorgelegt. Dazu werden unter Rühren eine Eisen(II)salzlösung, meist FeCl$_2$, und gleichzeitig oder danach eine Kobalt(II)- und Titan(IV)salzlösung, meist CoCl$_2$ und TiCl$_4$, hinzugefügt. Nach dem Einstellen des pH-Wertes mittels NaOH, KOH oder NH$_3$ auf Werte größer 8, oder bevorzugt mit den Alkalihydroxiden auf Werte größer 10, wird die Reaktionsmischung unter weiterem Rühren zwischen 5 Minuten und 8 Stunden, bevorzugt zwischen 10 Minuten und 6 Stunden bei Temperaturen zwischen 35°C und dem Siedepunkt gehalten. Danach wird die nun schwarzgefärbte Suspension filtriert, der Filterkuchen mit Wasser gewaschen und der gewaschene Filterkuchen bei Temperaturen zwischen 50 und 350°C, bevorzugt in nichtoxidierender Atmosphäre getrocknet. Das auf diese Weise erhaltene magnetische Material besteht aus isometrischen Teilchen. Isometrisch bedeutet im vorgegebenen Zusammenhang, daß die Teilchen in elektronenmikroskopischen Aufnahmen weitgehend würfelförmig erscheinen, d.h. im statistischen Mittel alle drei Raumachsen weitgehend gleichgroß sind und im einzelnen höchstens Längen-zu-Dicken-Verhältnisse bis zu 2:1 festzustellen sind.

In einer bevorzugten Ausführungsform des erfindungsgemäßen Verfahrens wird die γ-FeOOH-Synthese in der vorstehend beschriebenen Weise begonnen. Jedoch wird die Reaktion nicht bis zum Ende durchgeführt, sondern bereits nach teilweisem Umsatz der Fe(II)-Ionen, d.h. nach der γ-FeOOH-Keimbildungsphase unterbrochen. Dieser nun vorliegenden γ-FeOOH-Keimsuspension werden dann eine Co(II)-Salzlösung, eine TiCl₄-Lösung und eine der oben angegebenen Basen nach vorherigem Abdecken des Kesselinhaltes mit einer Inertgasatmosphäre zugefügt. Durch die Zugabe der Base wird der noch nicht zu γ-FeOOH oxidierte Fe(II)-Anteil als Fe(OH)₂ ausgefällt. Mit der Ausfällung von Fe(OH)₂ wird dann bei erhöhten pH-Werten von größer 8 bis etwa 14, bevorzugt 9 bis 13, die Umsetzung des γ-FeOOH zu cobalt- und titanhaltigem, magnetischem Eisenoxid vorgenommen. Zweckmäßigerweise erfolgt dies bei Temperaturen zwischen 35° C und dem Siedepunkt der Suspension. Da die Reaktion sehr rasch abläuft, genügen vor allem bei erhöhten Temperaturen Reaktionszeiten von 10 Minuten bis 8 Stunden, bevorzugt bis 6 Stunden. Die Aufarbeitung zum getrockneten Endprodukt erfolgt wie bereits beschrieben.

In einer weiteren Ausführungsform des erfindungsgemäßen Verfahrens werden die Co(II)-Ionen und Ti-(IV)-Ionen ganz oder teilweise bereits beim Beginn der γ-FeOOH-Synthese zugesetzt. Ansonsten wird wie vorstehend beschrieben verfahren.

Die erfindungsgemäß hergestellten magnetischen Eisenoxide lassen sich in bekannter Weise mit oxidierenden Gasen, wie z.B. Sauerstoff oder Luft, bei Temperaturen zwischen 120 und 450° C oxidieren. Abhängig von der jeweiligen Oxidationstemperatur haben sich Oxidationszeiten zwischen 10 Minuten und 6 Stunden als zweckmäßig erwiesen.

Die Oxidation kann bezüglich des Fe(II)-Gehaltes vollständig, aber auch nur teilweise bezogen auf den Ausgangseisen(II)-Gehalt erfolgen. Die höchsten $H_c$-Werte und die höchsten Werte für die relative Remanenz, d.h. das Verhältnis von spezifischer remanenter Magnetisierung des Pulvers zu seiner spezifischen Sättigungsmagnetisierung, werden nach Oxidation auf Fe(II)-Gehalte von kleiner als etwa 0,5 Gew.% erhalten.

Weiterhin lassen sich die magnetischen Eisenoxide, hergestellt nach dem erfindungsgemäßen Verfahren, in ihren magnetischen Eigenschaften, z.B. der spezifischen Magnetisierung oder zur Erhöhung der Kristallitgröße in an sich bekannter Weise in einer reduzierenden Atmosphäre, wie z.B. Wasserstoff und/oder Kohlenmonoxid und/oder mittels organischer Substanzen, die sich in Gegenwart von Eisenoxiden zersetzen, nachbehandeln. Zur Vermeidung einer Reduktion zu metallischen Phasen ist die gleichzeitige Anwesenheit von Wasserdampf zweckmäßig. Die Nachbehandlung erfolgt üblicherweise innerhalb von 10 Minuten bis 2 Stunden bei 250 bis 600° C.

Schließlich sei noch darauf hingewiesen, daß sich die erfindungsgemäß hergestellten isometrisch magnetischen Eisenoxide auch zur Verwendung als Druckfarbenpigmente oder zur Herstellung magnetischer Toner eignen.

Wesentlicher Verwendungszweck der erfindungsgemäß hergestellten kobalthaltigen isometrisch magnetischen Eisenoxide stellt der Einsatz als magnetisches Material bei der Herstellung von magnetischen Aufzeichnungsträgern dar. Mit ihnen lassen sich die von Koerzitivfeldstärke und Schaltfeldstärkenverteilung beeinflußten Aufzeichnungseigenschaften in überraschender Weise vorteilhaft verändern. Mit ihrer hohen relativen Remanenz in allen drei orthogonalen Richtungen lassen sie sich besonders vorteilhaft bei der Herstellung solcher magnetischer Aufzeichnungsträger heranziehen, mit welchen die Vorteile der Aufzeichnung mittels der wirksamen Vertikalkomponente zur Erhöhung von Bitdichte und zur Speicherung hoher Frequenzen ausgenutzt werden sollen.

Die Herstellung der Aufzeichnungsträger geschieht in an sich bekannter Weise. Hierzu werden die magnetischen Materialien in polymeren Bindemitteln dispergiert. Als Bindemittel eignen sich die für diesen Zweck bekannten Verbindungen, wie Homo-und Mischpolymerisate von Polyvinylderivaten, Polyurethanen, Polyestern und ähnliche. Die Bindemittel werden in Lösungen in geeigneten organischen Lösungsmitteln verwendet, die gegebenenfalls weitere Zusätze enthalten können. Die magnetischen Schichten werden auf starre oder biegsame Träger wie Platten, Folien und Karten aufgebracht.

Die vorliegende Erfindung wird anhand folgender Beispiele im Vergleich zu Versuchen nach dem Stand der Technik erläutert. Die angegebenen Co(II)-,Ti(IV)-oder Fe(II)-Prozentgehalte beziehen sich als Gew.% auf die Gesamtverbindung. Die magnetischen Werte der Pulverproben wurden mit einem Schwingmagnetometer bei einem magnetischen Feld von 160 kA/m oder nach Vormagnetisierung im Impulsmagnetisierer in einem Schwingmagnetometer gemessen. Die Werte der Koerzitivfeldstärke, $H_c$, gemessen A/m] wurden bei den Pulvermessungen auf eine Stopfdichte von $\rho$ = 1.2g/cm³ bei den Oxiden bezogen. Spezifische Remanenz ($M_r/\rho$) und Sättigung ($M_m/\rho$) der Pulver sind jeweils in [nTm³/g] angegeben. Die Sättigung bzw. Remanenz von Bändern werden in [mT] angegeben.

Die Schaltfeldstärkenverteilung (SFD, switching field distrubution) ist ein Maß für die magnetische Einheitlichkeit einer i.a. aus magnetisierbaren ein Einzelpartikeln bestehenden Speicherschicht. Sie gibt den Magnetfeldbereich an, in dem die Einzelpartikel umschalten. Die Schaltfeldstärkenverteilung einer magnetischen Aufzeichnungsschicht spielt bei der Speicherung kurzer Wellenlängen bzw. hoher Frequenzen eine entscheidende Rolle. Eine enge SFD verringert die Übergangslänge zwischen entgegengesetzt magnetisierten Bereichen und erlaubt so eine hohe Aufzeichnungsdichte.

Als Meßgröße für SFD wird (1-S*) herangezogen. (1-S*) wird aus der Steilheit der Hysteresekurve bei $M = O$ (d.h. Hc) gemäß der Formel $dM/dH = M_R/((1-S^*).Hc)$ gewonnen (M.L.Williams, R.L.Comstock, AIP Conf. Proc. 5, 725 (1971)).

Beispiel 1

Probe 1/1

In einem doppelwandigen 10-l-Glasgefäß, versehen mit Rückflußkühler, Rührer, pH-Elektrode und Temperaturregelung, werden unter Rühren 4,24 MOL $FeCl_2$ (538g $FeCl_2$ entsprechend 1346 ml einer technischen 29,9% $FeCl_2$-Lösung) und 0,23 Mol $CoCl_2$ entsprechend 55,26g $CoCl_2 \bullet 6H_2O$ mit Wasser bei 20°C und Durchleiten von Stickstoff zu einem Gesamtvolumen von 6 1 Lösung gelöst. Danach wurden 6,73g $TiCl_4$ entsprechend 3,89 ml $TiCl_4$ hinzugefügt. Unter weiterem Rühren wurden dann 1369 ml einer 15,1% Natronlauge, entsprechend 6,07 Mol NaOH, eingebracht und noch 10 Minuten nachgerührt. Nun wurde anstelle des Stickstoffs solange Luft durch die Suspension geleitet, bis nach 105 Minuten der pH-Wert auf kleiner 4 abgefallen war. Jetzt wurde durch die erhaltene $\gamma$-FeOOH-Suspension Stickstoff anstelle des Luftstroms geleitet und erneut 10 Minuten nachgerührt. Danach wurde mit NaOH ein pH von 9,5 eingestellt und innerhalb 3 h die Temperatur unter ständigem Rühren auf 80°C erhöht. Die Temperatur wurde 3 Stunden lang gehalten und anschließend nach Abkühlen der Suspension auf 20°C die schwarzgefärbte Suspension filtriert, der dunkel gefärbte Niederschlag mit Wasser gewaschen, bis das Filtrat weitgehendst anionenfrei war und danach der Filterkuchen bei 50°C im Wasserstrahlvakuum getrocknet (Probe 1). Die Hälfte des trockenen Pulvers (Probe1) wurde 30 Minuten lang in einem Drehrohrofen bei 350°C in einem Luftstrom oxidiert. Der Fe(II)-Gehalt der Probe 1/1 0x lag unter 0,2 Gew.%.

Proben 1/2 und 1/2 0x

Durchführung wie im Beispiel 1/1, jedoch mit dem höheren Titan(IV)-Gehalt entsprechend 13,46 g $TiCl_4$ (7,78 ml $TiCl_4$). Die Oxidationsdauer in der Fällungsphase bis pH < 4 betrug 95 Minuten.

Proben 1/3 und 1/3 0x

Durchführung wie im Beispiel 1/1, jedoch mit 40,38 g $TiCl_4$ entsprechend23,3 ml $TiCl_4$. Die Oxidationsdauer in der Fällungsphase bis pH < 4 betrug 85 Minuten.

Proben 1/4 und 1/4 0x

Durchführung wie im Beispiel 1/2, jedoch wurde das $TiCl_4$ bereits in der $FeCl_2$-Lösung vorgelöst. Die Oxidationsdauer in der Fällungsphase bis pH < 4 betrug 105 Minuten.

Proben 1/5 und 1/5 0x

Durchführung wie im Beispiel 1/3, jedoch wurde das $TiCl_4$ bereits in der $FeCl_2$-Lösung vorgelöst. Die Oxidationsdauer in der Fällungsphase bis pH < 4 betrug 95 Minuten.

Die Meßergebnisse der Proben des Beispiels 1 sind in der Tabelle 1 aufgeführt.

Beispiel 2

Proben 2/1 und 2/1 0x

Unter Weglassen der Titan(IV)-Zugabe in die Vorlage wurde zunächst gemäß Beispiel 1 verfahren, bis nach 85 Minuten der pH-Wert unter 4 gefallen war. Nun wurden unter weiterem Rühren der erhaltenen Suspension des cobalthatigen $\gamma$-FeOOH und nach Umstellen des Luftstroms auf Stickstoff 6,73 g $TiCl_4$ - (gelöst in 10 ml $H_2O$ und 10 ml $HCl_{conc}$) eingebracht und noch 10 Minuten mit 300 Upm nachgerührt. Anschließend wurde mit NaOH ein pH-Wert von 9,5 eingestellt. Nun wurde wie im Beispiel1 auf 80°C aufgeheizt und gemäß Beispiel 1 weiterverfahren (Proben 2/1 und 2/1 0x).

Proben 2/2 und 2/2 0x

Durchführung wie im Beispiel 2/1, jedoch unter Verwendung von 13,46 g $TiCl_4$ (gelöst in 20 ml $H_2O$ und 20 ml $HCl_{conc}$).

Proben 2/3 und 2/3 0x

Durchführung wie im Beispiel 2/1, jedoch unter Verwendung von 40,38 g $TiCl_4$ (gelöst in 20 ml $H_2O$ und 20 ml $HCl_{conc}$).

Proben 2/4 und 2/4 0x

Durchführung wie im Beispiel 2/1, jedoch unter Verwendung von 80,76 g $TiCl_4$ (gelöst in 20 ml $H_2O$ und 20 ml $HCl_{conc}$).

Die Meßergebnisse der Proben des Beispiels 2 sind in der Tabelle 1 aufgeführt.

Vergleichsbeispiel V1

Proben V1 und V1 0x

Durchführung gemäß Beispiel 1 ohne jeglichen Zusatz von Titan(IV). Die Oxidationsdauer in der Fällungsphase bis pH < 4 betrug 130 Minuten. Die probe V1 wurde gemäß Beispiel 1 zu V1 0x oxidiert.

Die Meßergebnisse der Proben V1 und V1 0x sind in der Tabelle 1 aufgeführt

Beispiel 3

Proben 3/1 und 3/1 0x

Durchführung wie Beispiel 2/3, jedoch wurden anstelle von $FeCl_2$ jetzt 1180,3 g $FeSO_4 \bullet 7H_2O$ und anstelle von $CoCl_2 \bullet 6H_2O$ jetzt 71,8 g $CoSO_4 \bullet 7H_2O$ verwendet. Die Oxidationsdauer in der Fällungsphase bis zu einem pH < 4 betrug 14,5 Stunden. In die so erhaltene Suspension des cobalthaltigen $\alpha$-FeOOH wurden nun -wie im Beispiel 2/3 beschrieben - 40,38 g $TiCl_4$ eingebracht und gemäß der Vorschrift des Beispiels 2/3 verfahren.

Die Meßergebnisse der Proben 3/1 und 3/1 0x sind in der Tabelle 1 aufgeführt.

Beispiel 4

Proben 4/1 und 4/1 0x

In der in Beispiel 1 beschriebenen Glasapparatur wurden unter Rühren 160 g $\gamma$-FeOOH mit einem BET-Wert von 46 m/g in 2250 ml Wasser suspendiert diert und der Behälter mit Hilfe eines Stickstoffstromes inertisiert. Nun wurden bei 22°C zuerst 37 g Fe(II), entsprechend 677 ml einer 1-molaren $FeCl_2$-Lösung, und 10 Minuten später 13,3 g Cobalt, entsprechend 22,5 ml einer 1-molaren $CoCl_2$-Lösung, zugegeben. Unter weiterem Rühren wurden dann 120 g NaOH, gelöst in 750 ml Wasser, innerhalb 10 Minuten eingebracht. Anschließend wurden 16,62 g $TiCl_4$, gelöst in 20 ml $H_2O$ und 20 ml $HCl_{conc}$ hinzugefügt. Nun wurde die Suspension innerhalb 2,5 Stunden auf 93°C aufgeheizt und diese Temperatur noch eine Stunde lang gehalten. Nach dem Abkühlen auf Raumtemperatur wurde die Suspension wie im Beispiel 1 beschrieben aufgearbeitet.

Die Meßergebnisse der Proben 4/1 und 4/1 0x sind in der Tabelle 1 aufgeführt.

Tabelle 1

| Bsp. | Probe | Ti(IV) (Gew.%) | $H_c$ | $\frac{Mm}{\varrho}$ | $\frac{Mr}{\varrho}$ | $\frac{Mr}{Mm}$ | SFD | BET |
|------|-------|------|------|------|------|------|------|------|
| V1 | V1 | – | 36 | 88 | 52 | 0,59 | 0,56 | |
| | V1 Ox | – | 61 | 73 | 59 | 0,80 | 0,41 | 18,2 |
| 1 | 1/1 | 0,5 | 36 | 92 | 56 | 0,61 | 0,58 | 29,9 |
| | 1/1 Ox | – | 65 | 76 | 60 | 0,80 | 0,47 | – |
| | 1/2 | 1,0 | 44 | 86 | 47 | 0,55 | 0,66 | 26,7 |
| | 1/2 Ox | – | 68 | 75 | 61 | 0,81 | 0,39 | – |
| | 1/3 | 3,0 | 31 | 90 | 50 | 0,55 | 0,68 | 32,8 |
| | 1/3 Ox | – | 81 | 71 | 60 | 0,85 | 0,44 | – |
| | 1/4 | 1,0 | 36 | 107 | 59 | 0,55 | 0,63 | 21,7 |
| | 1/4 Ox | – | 87 | 78 | 67 | 0,87 | 0,40 | – |
| | 1/5 | 3,0 | 35 | 92 | 50 | 0,54 | 0,79 | – |
| | 1/5 Ox | – | 85 | 70 | 60 | 0,85 | 0,44 | – |
| 2 | 2/1 | 0,5 | 33 | 97 | 61 | 0,62 | 0,63 | 18,0 |
| | 2/1 Ox | – | 89 | 79 | 69 | 0,88 | 0,40 | – |
| | 2/2 | 1,0 | 33 | 96 | 62 | 0,65 | 0,62 | 18,9 |
| | 2/2 Ox | – | 90 | 79 | 69 | 0,88 | 0,51 | – |

Tabelle 1: Fortsetzung

| Bsp. | Probe | Ti(IV) (Gew.%) | $H_c$ | $\frac{Mm}{\varrho}$ | $\frac{Mr}{\varrho}$ | $\frac{Mr}{Mm}$ | SFD | BET |
|------|-------|------|------|------|------|------|------|------|
| 2 | 2/3 | 3,0 | 38 | 88 | 56 | 0,64 | 0,65 | 29,6 |
| | 2/3 Ox | – | 99 | 73 | 65 | 0,89 | 0,45 | – |
| | 2/4 | 6,0 | 36 | 77 | 48 | 0,63 | 0,77 | 44,3 |
| | 2/4 Ox | – | 91 | 66 | 57 | 0,87 | 0,59 | – |
| 3 | 3/1 | 3,0 | 53 | 62 | 35 | 0,57 | 0,64 | – |
| | 3/1 Ox | – | 92 | 56 | 48 | 0,86 | 0,47 | – |
| 4 | 4/1 | 2,0 | 45 | 64 | 33 | 0,52 | 0,73 | – |
| | 4/1 Ox | – | 81 | 57 | 44 | 0,77 | 0,64 | – |

Beispiel 5a bis g

In einer mit 100 Teilen Stahlkugeln gefüllten Kugelmühle mit einem Füllvolumen von 250 Volumenteilen. wurden jeweils 50 Teile der in der Tabelle 2 angegebenen magnetischen Eisenoxide, 3 Teile eines langkettigen amphoteren, organophilen Dispergiermittels, 0,05 Teile eines Siliconöles und 0,5 Teile eines isomeren Carbonsäuregemisches mit einem Fließpunkt < 5°C, 6.6 Teile eines handelsüblichen isocyanatfreien Polyesterurethans aus Adipinsäure, Butandiol-1,4 und 4,4-Dicyanatodiphenylmethan mit einem K-Wert von 61 (gemessen als 1 %ige Lösung in Tetrahydrofuran) und 25 Teile eines Vinylchlorid-Maleinsäureethylester-Copolymeren mit einem K-Wert von 59 (ebenfalls als 1 %ige Lösung in Tetrahydrofuran gemessen), sowie 78 Teile eines Gemisches aus gleichen Teilen von Tetrahydrofuran und 1,4-Dioxan zugegeben, wobei die Eingaben der angegebenen Bindemittel in Form ihrer Lösungen in dem genannten Lösemittelgemisch erfolgte. Nach einer Dispergierdauer von 3,5 Stunden wurde die Magnetdispersion filtriert und anschließend mit einer üblichen Beschichtungseinrichtung auf eine 12 μm dicke Polyethylenterephthalatfolie gegossen, so daß nach Trocknung in einem Trockenkanal und anschließendem Glättvorgang mit auf 80°C beheiztem Mehrwalzenkalander eine Schichtdicke von 4.1 μm erzielt wurde, Die an der Magnetschicht gemessenen magnetischen Eigenschaften sind in Tabelle 2 angegeben.

Tabelle 2

| Beispiel | Magnet. Material | $H_c$ | Mr | Mr/Mm | SFD |
|----------|------------------|-------|-----|-------|------|
| 5a | 1/2 | 37 | 134 | 0,62 | 0,52 |
| 5b | 1/2 Ox | 77 | 140 | 0,84 | 0,25 |
| 5c | 1/4 Ox | 82 | 159 | 0,87 | 0,22 |
| 5d | 1/5 Ox | 78 | 136 | 0,85 | 0,27 |
| 5e | 2/3 | 33 | 150 | 0,74 | 0,47 |
| 5f | 2/3 Ox | 99 | 152 | 0,91 | 0,25 |
| 5g | V1 Ox | 61 | 141 | 0,83 | 0,27 |

**Patentansprüche**

1. Verfahren zur Herstellung isometrischer kobalt- und titanhaltiger magnetischer Eisenoxide, enthaltend 2 bis 8 Gew.% Kobalt- und 0.5 bis 6 Gew.% Titan(IV)-Ionen. dadurch gekennzeichnet, daß nadelförmiges Eisen(III)oxidhydroxid in wäßriger alkalischer Suspension mit Verbindungen des zweiwertigen Kobalts und Eisens sowie des vierwertigen Titans bei pH-Werten von > 8 unter Inertgas bei Temperaturen zwischen 35°C und dem Siedepunkt der Suspension umgesetzt wird.

2. Verfahren zur Herstellung isometrischer kobalt- und titanhaltiger magnetischer Eisenoxide gemäß Anspruch 1, dadurch gekennzeichnet, daß nadelförmiges Eisen(III) oxidhydroxid in wäßriger alkalischer Suspension mit Verbindungen des zweiwertigen Kobalts und Eisens sowie des vierwertigen Titans bei pH-Werten von > 8 unter Inertgas bei Temperaturen zwischen 35°C und dem Siedepunkt der Suspension umgesetzt und das resultierende Produkt anschließend bei Temperaturen zwischen 120 und 450°C mit oxidierenden Gasen zumindest teilweise oxidiert wird.

3. Verfahren gemäß Anspruch 1 oder 2, dadurch gekennzeichnet, daß kobalt- und titanfreies γ-FeOOH in wäßriger Suspension mit Co(II)-Ionen, Ti(IV)-Ionen und Fe(II)-Ionen bei pH-Werten von > 8 unter Inertgasen bei Temperaturen zwischen 35°C und dem Siedepunkt der Suspension umgesetzt wird.

4. Verfahren gemäß Anspruch 1 oder 2, dadurch gekennzeichnet, daß kobalthaltiges γ-FeOOH in wäßriger Suspension mit Fe(II)-Ionen, Titan(IV)-Ionen und gegebenenfalls zusätzlichen Co(II)-Ionen bei pH-Werten von > 8 unter Inertgasen bei Temperaturen zwischen 35°C und dem Siedepunkt der Suspension umgesetzt wird.

5. Verfahren gemäß Anspruch 1 und 2, dadurch gekennzeichnet, daß titanhaltiges γ-FeOOH in wäßriger Suspension mit Fe(II)-Ionen, Co(II)Ionen und gegebenenfalls zusätzlichen Titan(IV)-Ionen bei pH-Werten von > 8 unter Inertgasen bei Temperaturen zwischen 35°C und dem Siedepunkt der Suspension umgesetzt wird.

**6.** Verfahren gemäß Anspruch 1 oder 2, dadurch gekennzeichnet, daß kobalthaltiges γ-FeOOH in seiner salzhaltigen Herstellsuspension mit Fe(II)-Ionen, Ti (IV)-Ionen und gegebenenfalls zusätzlichen Co(II)-Ionen bei pH-Werten von > 8 unter Inertgasen bei Temperaturen zwischen 35 ° C und dem Siedepunkt der Suspension umgesetzt wird.

**7.** Verfahren gemäß Anspruch 1 oder 2, dadurch gekennzeichnet, daß titanhaltiges γ-FeOOH in seiner salzhaltigen Herstellsuspension mit Fe(II)-Ionen, Co(II)-Ionen und gegebenenfalls zusätzlichen Ti(IV)-Ionen bei pH-Werten von > 8 unter Inertgasen bei Temperaturen zwischen 35 ° C und dem Siedepunkt der Suspension umgesetzt wird.

**8.** Verfahren gemäß Anspruch 1 oder 2, dadurch gekennzeichnet, daß kobalt- und titanfreies γ-FeOOH in seiner salzhaltigen Herstellsuspension mit Co(II)-Ionen, Ti (IV)-Ionen und Fe(II)-Ionen bei pH-Werten von > 8 unter Inertgasen bei Temperaturen zwischen 35 ° C und dem Siedepunkt der Suspension umgesetzt wird.

**Claims**

**1.** A process for preparing isometric cobalt- and titanium-containing magnetic iron oxides which contain from 2 to 8% by weight of cobalt and from 0.5 to 6% by weight of titanium(IV) ions, which comprises reacting acicular iron(III) oxide hydroxide in aqueous alkaline suspension with compounds of divalent cobalt and iron and of tetravalent titanium under inert gas at > pH 8 and at from 35 ° C to the boiling point of the suspension.

**2.** A process for preparing isometric cobalt- and titanium-containing magnetic iron oxides as claimed in claim 1, wherein acicular iron(III) oxide hydroxide is reacted in aqueous alkaline suspension with compounds of divalent cobalt and iron and of tetravalent titanium under inert gas at > pH 8 and at from 35 ° C to the boiling point of the suspension and the resulting product is subsequently at least partially oxidized with oxidizing gases at 120-450 ° C.

**3.** A process as claimed in claim 1 or 2, wherein cobalt-and titanium-free γ-FeOOH is reacted in aqueous suspension with Co(II) ions, Ti(Iv) ions and Fe(II) ions under inert gases at > pH 8 and at from 35 ° C to the boiling point of the suspension.

**4.** A process as claimed in claim 1 or 2, wherein cobalt-containing γ-FeOOH is reacted in aqueous suspension with Fe(II) ions, titanium(IV) ions and with or without additional Co(II) ions under inert gases at > pH 8 and at from 35 ° C to the boiling point of the suspension.

**5.** A process as claimed in claim 1 or 2, wherein titanium-containing γ-FeOOH is reacted in aqueous suspension with Fe(II) ions, Co(II) ions and with or without additional titanium(IV) ions under inert gases at > pH 8 and at from 35 ° C to the boiling point of the suspension.

**6.** A process as claimed in claim 1 or 2, wherein cobalt-containing γ-FeOOH is reacted in its salt-containing synthesis suspension with Fe(II) ions, Ti(Iv) ions and with or without additional Co(II) ions under inert gases at >pH 8 and at from 35 ° C to the boiling point of the suspension.

**7.** A process as claimed in claim 1 or 2, wherein titanium-containing γ-FeOOH is reacted in its salt-containing synthesis suspension with Fe(II) ions, Co(II) ions and with or without additional Ti(IV) ions under inert gases at > pH 8 and at from 35 ° C to the boiling point of the suspension.

**8.** A process as claimed in claim 1 or 2, wherein cobalt- and titanium-free γ-FeOOH is reacted in its salt-containing synthesis suspension with Co(II) ions, Ti(IV) ions and Fe(II) ions under inert gases at > pH 8 and at from 35 ° C to the boiling point of the suspension.

**Revendications**

**1.** Procédé de préparation d'oxydes de fer magnétiques isométriques contenant du cobalt et du titane à raison de 2 à 8 % en poids d'ions cobalt et 0,5 à 6 % en poids d'ions titane-IV, caractérisé en ce que l'on fait réagir de l'oxyde basique de fer-III aciculaire en suspension aqueuse alcaline avec des composés du cobalt et du fer divalents et du titane tétravalent à des pH supérieurs à 8 en atmosphère de gaz inerte, à des températures comprises entre 35 degrés C et le point d'ébullition de la suspension.

2. Procédé de préparation d'oxydes de fer magnétiques isométriques contenant du cobalt et du titane selon la revendication 1, caractérisé en ce que l'on fait réagir de l'oxyde basique de fer-III aciculaire en suspension aqueuse alcaline avec des composés du cobalt et du fer divalents et du titane tétravalent, à des pH supérieurs à 8, en atmosphère de gaz inerte, à des températures comprises entre 35 degrés C et le point d'ébullition de la suspension puis on oxyde le produit obtenu, en partie au moins, par des gaz oxydants à des températures comprises entre 120 degrés C et 450 degrés C.

3. Procédé selon la revendication 1 ou 2, caractérisé en ce que l'on fait réagir du gamma-FeOOH exempt de cobalt et de titane en suspension aqueuse avec des ions Co-II, des ions Ti-IV et des ions Fe-II à des pH supérieurs à 8, en atmosphère de gaz inerte à des températures comprises entre 35 degrés C et le point d'ébullition de la suspension.

4. Procédé selon la revendication 1 ou 2, caractérisé en ce que l'on fait réagir du gamma-FeOOH contenant du cobalt en suspension aqueuse avec des ions Fe-II, des ions titane-IV et le cas échéant des ions Co-II à des pH supérieurs à 8, en atmosphère de gaz inerte, à des températures comprises entre 35 degrés C et le point d'ébullition de la suspension.

5. Procédé selon les revendications 1 et 2, caractérisé en ce que l'on fait réagir du gamma-FeOOH contenant du titane en suspension aqueuse avec des ions Fe-II, des ions Co-II et le cas échéant des ions titane-IV à des pH supérieurs à 8, en atmosphère de gaz inerte, à des températures comprises entre 35 degrés C et le point d'ébullition de la suspension.

6. Procédé selon la revendication 1 ou 2, caractérisé en ce que l'on fait réagir le gamma-FeOOH contenant du cobalt dans sa suspension de préparation, contenant des sels, avec des ions Fe-II, des ions Ti-IV et la cas échéant des ions Co-II à des pH supérieurs à 8, en atmosphère de gaz inerte, à des températures comprises entre 35 degrés C et le point d'ébullition de la suspension.

7. Procédé selon la revendication 1 ou 2, caractérisé en ce que l'on fait réagir le gamma-FeOOH contenant du titane, dans sa suspension de préparation, contenant des sels, avec des ions Fe-II, des ions Co-II et le cas échéant des ions Ti-IV à des pH supérieurs à 8, en atmosphère de gaz inerte, à des températures comprises entre 35 degrés C et le point d'ébullition de la suspension.

8. Procédé selon la revendication 1 ou 2, caractérisé en ce que l'on fait réagir le gamma-FeOOH exempt de cobalt et de titane, dans sa suspension de préparation, contenant des sels, avec des ions Co-II, des ions Ti-IV et des ions Fe-II, à des pH supérieurs à 8, en atmosphère de gaz inerte, à des températures comprises entre 35 degrés C et le point d'ébullition de la suspension.